# EUROPEAN PATENT SPECIFICATION

(11) **EP 3 171 141 B1**
(45) Date of publication and mention of the grant of the patent: **27.05.2020**
(21) Application number: 15822444.4
(22) Date of filing: 07.07.2015
(51) Int. Cl.: G01G 19/387, G01G 19/393

(54) **COMBINATION WEIGHING DEVICE**
KOMBINATIONSWIEGEVORRICHTUNG
DISPOSITIF DE PESAGE ASSOCIATIF

(30) Priority: 18.07.2014 JP 2014148053
(43) Date of publication of application: 24.05.2017
(73) Proprietor: Ishida Co., Ltd., Kyoto-shi, Kyoto 606-8392 (JP)
(72) Inventor: OTOSHI Hiroki, Ritto-shi, Shiga 520-3026 (JP); IWASA Seisaku, Ritto-shi, Shiga 520-3026 (JP)
(74) Representative: Lang, Johannes
(86) International application number: PCT/JP2015/069513
(87) International publication number: WO 2016/009896

(56) References cited:
- JP-A- 2011 209 156
- JP-A- 2014 509 290
- US-A1- 2013 186 696
- US-A1- 2013 186 696

## Description

### Technical Field

The present invention relates to a combination weighing apparatus.

### Background Art

The patent literature 1 discloses a combination weighing apparatus. This combination weighing apparatus includes a distributing portion that rotates to convey a weighed object outward, a plurality of conveying portions arranged in a radial manner along a circumference of the distributing portion and convey the weighed object discharged from the distributing portion by a rotating screw, a dividing portion arranged between the conveying portions and forms an introducing portion of the weighed object in the conveying portions, a plurality of hoppers that are provided corresponding to each conveying portion and receive the weighed object that has been discharged from the conveying portion, and a plurality of weighing hoppers arranged below the plurality of hoppers.
Document US 2013/186696 A1 discloses a combination weigher including a dispersion unit adapted to radially disperse product material dropped in from above onto the dispersion unit, plurality of weighing hoppers, plurality of conveyor units arranged around and below a periphery of the dispersion unit.

### Citation List

### Patent Literature

Patent Literature 1: Japanese Unexamined Patent Publication No. 2014-509290

### Summary of Invention

### Technical Problem

As the combination weighing apparatus described above, in a configuration where a dividing portion is arranged between conveying portions, a weighed object may be stuck in the dividing portion in a state of being across two conveying portions depending on a form of the weighed object. In order to avoid such an event, an edge portion of a distributing portion side of the dividing portion is normally in a form in which the weighed object is guided to an introducing portion of the conveying portion (form in which the weighed object easily enters the introducing portion). More specifically, the edge portion of the dividing portion is in a very small form in width as the apparatus stated in the patent literature 1 or in a projecting form tapered towards the distributing portion side.

The weighed object may be stuck between the distributing portion and the edge portion of the dividing portion. At this moment, in a form of a conventional edge portion of the dividing portion, an area where the edge portion and the weighed object contact each other is small, and hence an area where the weighed object and the distributing portion contact each other is also small. For this reason, a force by rotation of the distributing portion may not be effectively transmitted to the weighed object and the weighed object may remain between the distributing portion and the edge portion of the dividing portion.

The present invention is intended to provide a combination weighing apparatus that can prevent a weighed object from remaining between the distributing portion and the dividing portion.

### Solution to Problem

A combination weighing apparatus is defined by claims 1 and 2, which according to an aspect of the present invention includes a distributing portion that rotates to convey a weighed object outward, a plurality of conveying portions arranged in a radial manner along an outer edge portion of the distributing portion and convey the weighed object discharged from the distributing portion, and a dividing portion arranged between the conveying portions, in which an edge portion of the outer edge portion side of the dividing portion causes the weighed object to contact the outer edge portion at a plurality of points when the weighed object is positioned between the outer edge portion and the edge portion.

The edge portion of the outer edge portion side of the dividing portion included in the combination weighing apparatus causes the weighed object to contact the outer edge portion at the plurality of points. Due to this, when the weighed object is stuck between the outer edge portion of the distributing portion and the edge portion, an area where the weighed object and the outer edge portion of the distributing portion contact each other is larger than that in a case where they are not caused to contact each other at the plurality of points. As a result, the force by rotation of the distributing portion is effectively transmitted to the weighed object and the weighed object is pulled out from between the edge portion of the dividing portion and the outer edge portion the distributing portion. Consequently, it is difficult for the weighed object to remain between the distributing portion and the dividing portion.

According to claim 1, the outer edge portion side of the edge portion is a flat surface. In this way the weighed object can contact the outer edge portion at a plurality of points when the weighed object is stuck between the edge portion and the outer edge portion.

According to claim 2, the outer edge portion side of the edge portion is in a form where it is parallel along the outer edge portion. In this way, with, for example, an outwardly projecting curved face, the weighed object can be caused to contact the outer edge portion at a plurality of points when the weighed object is stuck between the edge portion and the outer edge portion.

In an embodiment, the weighed object may have adhesiveness. In a case where the weighed object has adhesiveness, it is easy for the weighed object to get stuck in a gap between the distributing portion and the edge portion of the dividing portion. Therefore, the configuration of the edge portion that causes the weighed object to contact the outer edge portion at a plurality of points is effective particularly in a case of weighing the weighed object that has adhesiveness. It is to be noted that the weighed object that has adhesiveness is meat for instance.

### Advantageous Effects of Invention

The present invention can prevent the weighed object from remaining between the distributing portion and the dividing portion.

### Brief Description of Drawings

FIG. 1 is a schematic perspective view of a combination weighing apparatus according to an embodiment.
FIG. 2 is a schematic perspective view in a case where a guide ring of the combination weighing apparatus illustrated in FIG. 1 is omitted.
FIG. 3 is a perspective view illustrating a distributing table and a conveying portion.
FIG. 4 is a perspective view illustrating the conveying portion.
FIG. 5 is a perspective view illustrating the guide ring.
FIG. 6 is an upper view of the combination weighing apparatus illustrated in FIG. 1.
FIG. 7 is a magnified view of an edge portion of a guide block.
FIG. 8 is a view illustrating a weighed object stuck between the edge portion of the guide block and the distributing table.
FIG. 9 is a view illustrating a weighed object stuck between an edge portion of a conventional guide block and the distributing table.
FIG. 10 is a magnified view of the edge portion of the guide block according to another embodiment.
FIG. 11 is a magnified view of the edge portion of the guide block according to another embodiment.

### Description of Embodiments

A detailed description of a preferred embodiment of the present invention will now be given with reference to the drawings. It is to be noted that in the description of the drawings, identical or corresponding elements are designated by the same reference numerals and overlapping descriptions will be omitted.

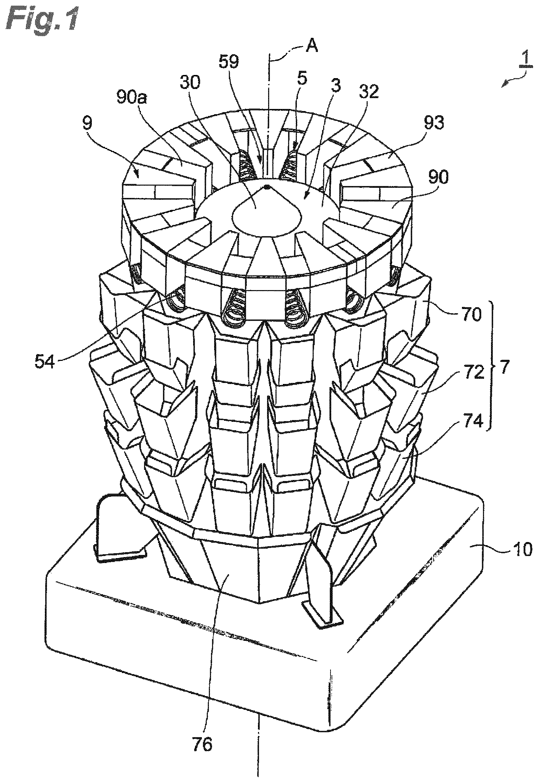

FIG. 1 is a schematic perspective view of a combination weighing apparatus according to an embodiment.

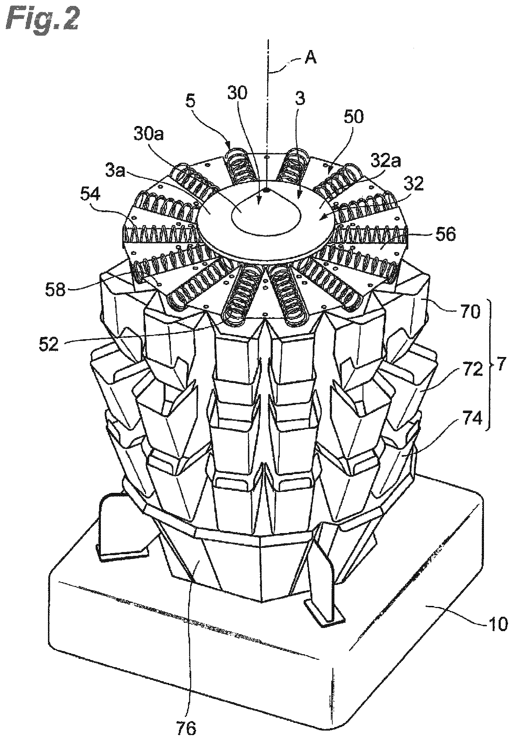

FIG. 2 is a schematic perspective view in a case where a guide ring of the combination weighing apparatus illustrated in FIG. 1 is omitted.

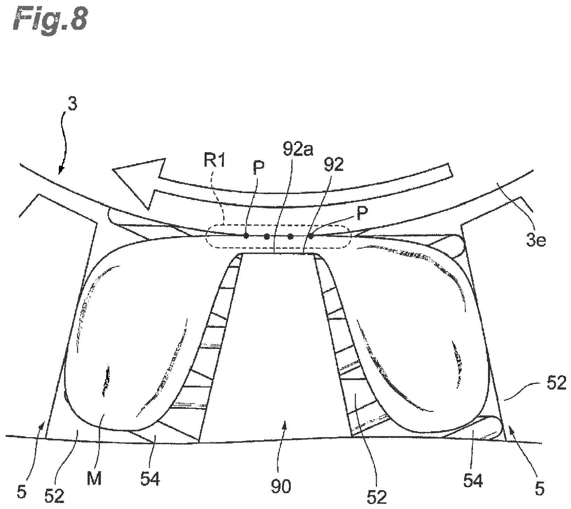

A combination weighing apparatus 1 illustrated in FIG. 1 and FIG. 2 weighs out a weighed object M (refer to FIG. 8), each of which has a different mass, so that a total mass falls within an acceptable range. Here, the weighed object M includes raw meat such as beef, pork, and chicken. The combination weighing apparatus 1 of the present embodiment can preferably weigh articles having adhesiveness in particular.

As illustrated in FIG. 1 and FIG. 2, the combination weighing apparatus 1 includes a distributing table (distributing portion) 3, a plurality of conveying portions 5, a plurality of hoppers 7, and a guide ring 9. The distributing table 3, the conveying portions 5, the hoppers 7, and the guide ring 9 are supported by a frame 10.

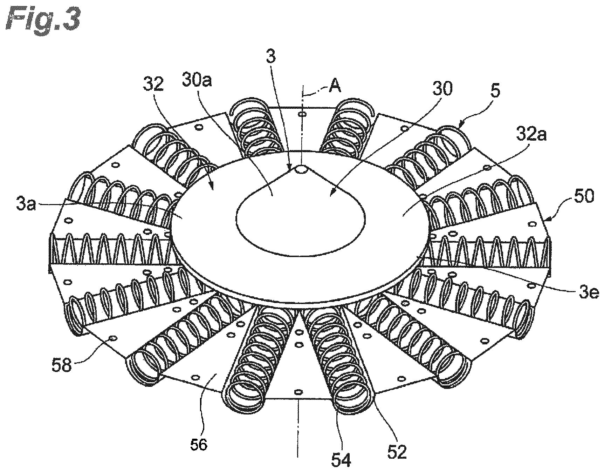

FIG. 3 is a perspective view illustrating the distributing table and the conveying portions. As illustrated in FIG. 1 to FIG. 3, the distributing table 3 is in a circular shape in a plan view. The distributing table 3 has a first distributing portion 30 and a second distributing portion 32. The first distributing portion 30 is in a cone shape with its center positioned at a central axis A. The first distributing portion 30 has a conveying face (outside face) 30a. The first distributing portion 30 is connected to the second distributing portion 32 on its bottom portion.

The second distributing portion 32 is in a shape of cone that has a vertex angle larger than that of the first distributing portion 30 whose vertex portion is removed. At a position that corresponds to the removed vertex portion, the second distributing portion 32 is connected to the first distributing portion 30. A conveying face 32a of the second distributing portion 32 is different in inclination from the conveying face 30a of the first distributing portion 30. Due to this, an inclination of a conveying face 3a of the distributing table 3 changes at a connection portion of the first distributing portion 30 and the second distributing portion 32.

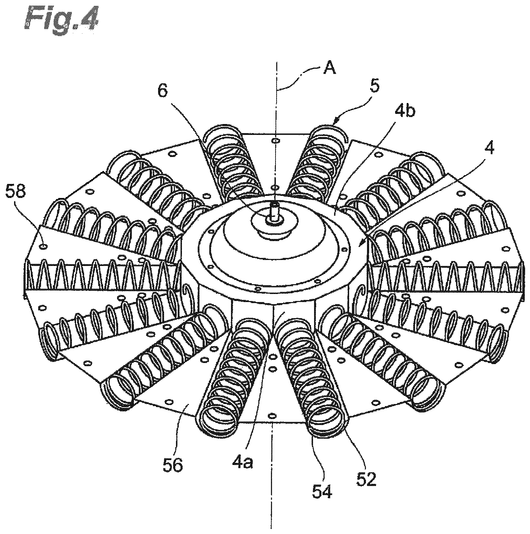

The distributing table 3 is attached to a rotating axis 6 (refer to FIG. 4) supported by a supporting portion 4 (refer to FIG. 4). The distributing table 3 is detachable with respect to the rotating axis 6. A motor that is not illustrated here drives the rotating axis 6. The distributing table 3 rotates (normal and reverse rotations) around the central axis A by the motor. By rotating around the central axis A, the distributing table 3 conveys (distributes) the weighed object M fed on the distributing table 3 in a direction towards an outer edge portion 3e of the conveying face 3a of the distributing table 3.

FIG. 4 is a perspective view illustrating the conveying portion. As illustrated in FIG. 2 to FIG. 4, the conveying portion 5 includes a trough 52 and a screw 54 arranged in the trough 52. The plurality of troughs 52 are formed on a trough plate 50. The trough plate 50 is in a circular shape in a plan view. An inner diameter of the trough plate 50 is substantially equal to an outer diameter of the supporting portion 4 and is smaller than an outer diameter of the distributing table 3. An inner circumference edge of the trough plate 50 is positioned inward than the outer edge portion 3e of the distributing table 3 when seen from the above along the central axis A.

The trough 52 is a recessed portion (recessed shaped groove) in a semicircular column shape. The trough 52 is arranged in a radial manner from the center (the central axis A) of the trough plate 50. The trough 52 extends from the center to an outer edge of the trough plate 50.

Here, a connecting portion 56 that connects the troughs 52 is arranged between the troughs 52 adjacent to each other in a circumferential direction of the trough plate 50. The connecting portion 56 is in a triangle shape in which the inner circumference edge side is the vertex. In addition, the connecting portion 56 is a flat surface. Each of the connecting portions 56 has a plurality of (three in this case) engaging bosses 58 for engaging the guide ring 9.

The screw 54 is arranged in each of the troughs 52. By a motor (not illustrated) arranged inside a wall portion 4a corresponding to the trough 52 in the supporting portion 4, the screw 54 is driven and rotates. The conveying portion 5, which includes the trough 52 and the screw 54, is arranged in a radial manner along the outer edge portion 3e of the distributing table 3. Then the conveying portion 5 conveys the weighed object M discharged from the distributing table 3 along the trough 52 by the screw 54 that is rotating. An edge portion of the distributing table 3 side of the conveying portion 5 is an introducing portion 59 for the weighed object M.

As illustrated in FIG. 1 and FIG. 2, the hopper 7 is provided corresponding to each of the conveying portions 5. Then the hopper 7 receives the weighed object M that has been discharged from the conveying portion 5. More specifically, the hopper 7 includes a pool hopper 70, a weighing hopper 72, and a booster hopper 74. The pool hopper 70, the weighing hopper 72, and the booster hopper 74 are arranged in this order from an upper side toward a lower side.

The pool hopper 70 temporarily holds the weighed object M that has been discharged from the conveying portion 5. The weighing hopper 72 temporarily holds the weighed object M that has been discharged from the pool hopper 70. The weighing hopper 72 is connected with a weighing apparatus that is not illustrated. Then this weighing apparatus weighs mass of the weighed object M. The booster hopper 74 temporarily holds the weighed object M that has been discharged from the weighing hopper 72. In the above, the set of the pool hopper 70, the weighing hopper 72, and the booster hopper 74 are arranged corresponding to each of the conveying portions 5.

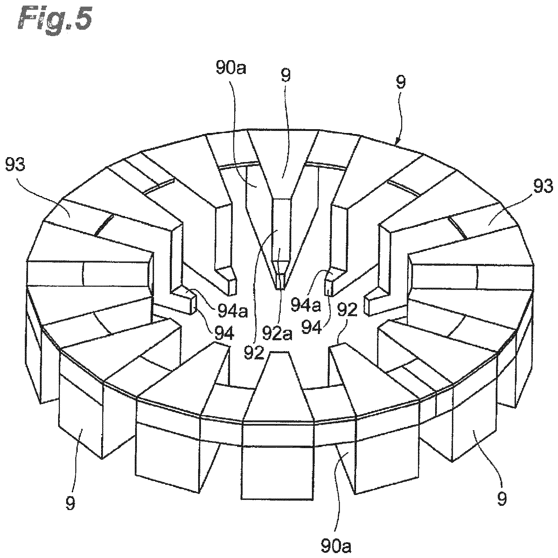

FIG. 5 is a perspective view illustrating the guide ring. As illustrated in FIG. 1 and FIG. 5, the guide ring 9 includes a plurality of guide blocks (dividing portions) 90 arranged in a radial manner along the outer edge portion 3e of the distributing table 3. The guide block 90 is in a trapezoidal shape whose upper side is an edge portion 92 on the outer edge portion 3e side of the distributing table 3 in a plan view. Here, a connecting portion 93 connects the guide blocks 90 adjacent to each other. A lower portion of the edge portion 92 of the guide block 90 is provided with a projecting portion 94 that projects inward than an edge face 92a. An upper face 94a of the projecting portion 94 is a flat surface.

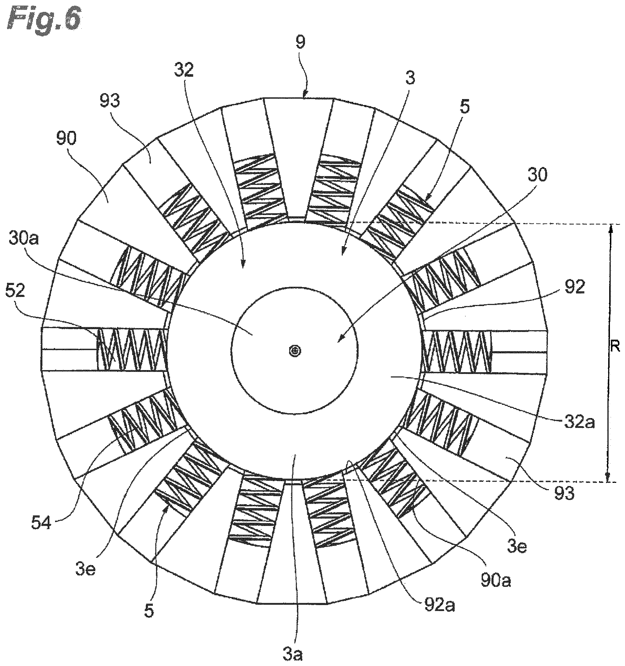

The guide block 90 is arranged on the connecting portion 56 of the trough plate 50. At this time, the engaging boss 58 of the connecting portion 56 is fitted in an engaging hole (not illustrated) provided on a bottom face of the guide block 90. As a result, the guide block 90 is engaged in the connecting portion 56 of the trough plate 50. After the guide ring 9 is arranged on the trough plate 50, the distributing table 3 is attached to the rotating axis 6. The projecting portion 94 of the guide block 90 is positioned inward than the outer edge portion 3e of the distributing table 3 when seen from the above along the central axis A. As illustrated in FIG. 6, there is a gap formed between the edge face 92a of the edge portion 92 of the guide block 90 and the outer edge portion 3e of the distributing table 3.

Since the guide block 90 is arranged on the trough plate 50, side walls 90a of the guide blocks 90 adjacent to each other form an area that has a width corresponding to a width of the trough 52 on each of the conveying portions 5. The edge portion 92 of the guide block 90 forms the introducing portion (introducing opening) 59 through which the weighed object M is introduced to the conveying portions 5. With this configuration, the weighed object M that is conveyed by the distributing table 3 is guided to the conveying portions 5 by the guide block 90 and thus introduced into the conveying portions 5.

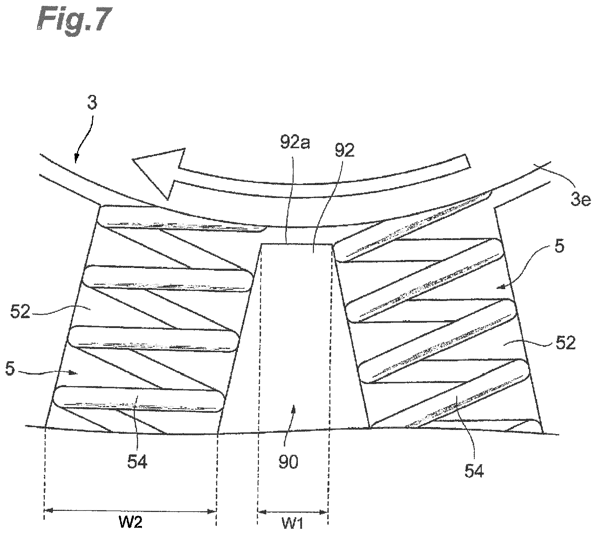

FIG. 7 is a magnified view of the edge portion of the guide block. As illustrated in FIG. 7, in the guide block 90, the edge face 92a of the edge portion 92 of the outer edge portion 3e side of the distributing table 3 is a flat surface, viewed from a direction along the central axis A. The edge face 92a is opposed to an edge face of the outer edge portion 3e of the distributing table 3. A width W1 of the edge portion 92 of the guide block 90 has a length equal to or greater than 1/4 of a width W2 of the trough 52 for example. Alternatively, the width W1 of the edge portion 92 has a length equal to or greater than 1/22 of a diameter R (refer to FIG. 6) of the distributing table 3 for instance. In short, the width W1 of the edge portion 92 may be set as appropriate in accordance with a design request desired by a designer.

In a case where the configuration described above is provided, the weighed object M contacts the outer edge portion 3e at a plurality of points when the weighed object M is positioned between the outer edge portion 3e of the distributing table 3 and the edge portion 92. More specifically, as illustrated in FIG. 8, for example, when the weighed object M is across the conveying portions 5 adjacent to each other and positioned between the outer edge portion 3e of the distributing table 3 and the edge portion 92, the weighed object M contacts the outer edge portion 3e due to an action of the edge portion 92. At this moment, the weighed object M contacts the outer edge portion 3e at a plurality of points in a section of a region Ri enclosed by the chained line in FIG. 8.

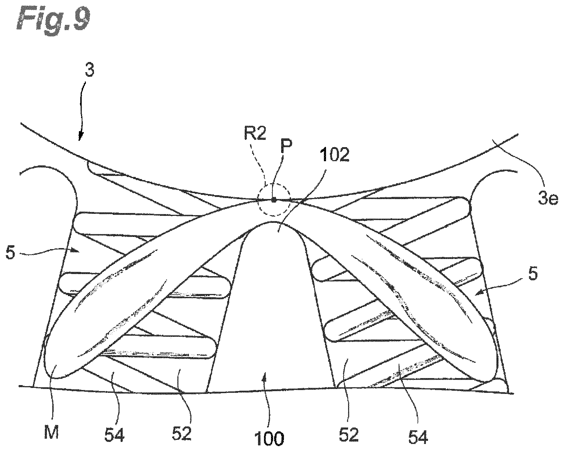

FIG. 9 is a view illustrating the weighed object stuck between an edge portion of a conventional guide block and the distributing table. As illustrated in FIG. 9, an edge portion 102 of a conventional guide block 100 is in a projecting form tapered towards the distributing table 3. In a case where this configuration is provided, when the weighed object M is positioned between the outer edge portion 3e of the distributing table 3 and the edge portion 102, the weighed object M contacts the outer edge portion 3e of the distributing table 3 at a point P (indicated by the black circle in FIG. 9) in a section of a region R2 enclosed by the chained line in FIG. 9. For this reason, an area where the distributing table 3 and the weighed object M contact each other is smaller than that in a case where the weighed object M contacts at a plurality of points. As a result, a force by rotation of the distributing table 3 is not effectively transmitted to the weighed object M. Thus, the weighed object M remains between the distributing table 3 and the edge portion 102 of the guide block 100.

On the other hand, the combination weighing apparatus 1 acts in a following manner. As specifically illustrated in FIG. 8, due to an action of the edge face 92a formed in the edge portion 92 of the outer edge portion 3e side of the guide block 90, the weighed object M contacts the outer edge portion 3e at, for instance, a plurality of points P (four points in FIG. 8). More specifically, the edge portion 92 contacts at the edge face 92a the weighed object M that is across the conveying portions 5 adjacent to each other, so as to cause the weighed object M to extend between the outer edge portion 3e of the distributing table 3 and the edge portion 92 by a width of the edge face 92a. Due to this, compared with the conventional configuration described above, an area where the weighed object M and the outer edge portion 3e of the distributing table 3 contact each other is larger. Consequently, a force by rotation of the distributing table 3 is effectively transmitted to the weighed object M. As a result, it becomes easy for the weighed object M to be pulled out from between the edge portion 92 of the guide block 90 and the outer edge portion 3e of the distributing table 3. Hence, it can be made difficult for the weighed object M to remain between the distributing table 3 and the guide block 90.

In the present embodiment, the outer edge portion 3e side of the edge portion 92 of the guide block 90 is a flat surface. In this way, if the edge portion 92 is a flat surface, the weighed object M contacts the outer edge portion 3e at a plurality of points when the weighed object M is stuck between the edge portion 92 and the outer edge portion 3e.

In the present embodiment, the combination weighing apparatus 1 weighs the weighed object M such as raw meat that has adhesiveness. In a case where the weighed object M has adhesiveness, it is easy for the weighed object M to get stuck in a gap between the distributing table 3 and the edge portion 92 of the guide block 90. Therefore, the configuration of the edge portion 92 of the guide block 90 that causes the weighed object M to contact the outer edge portion 3e at a plurality of points is effective particularly in a case of weighing the weighed object M that has adhesiveness.

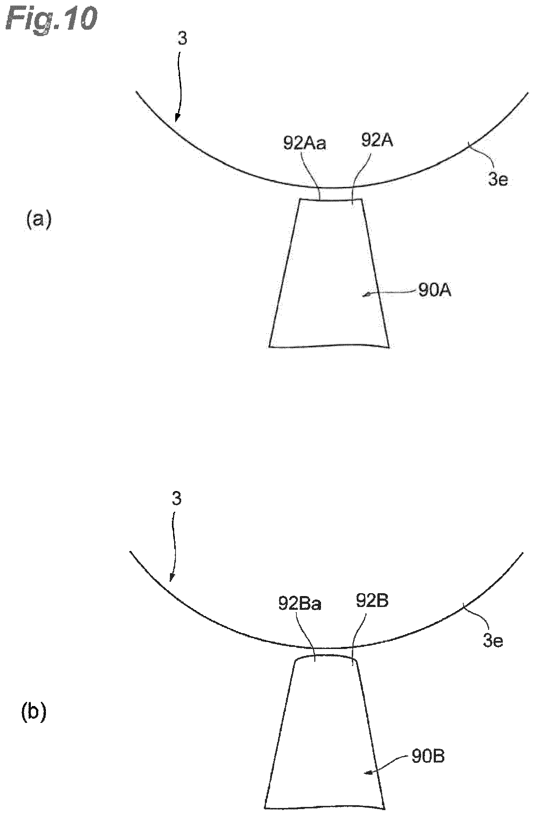

The present invention is not limited to the embodiment described above. While in the embodiment described above, the description has been made with an example of the form in which the edge face 92a of the edge portion 92 of the guide block 90 is a flat surface, the configuration of the edge portion 92 is not limited to it. As illustrated in FIG. 10(a), an edge face 92Aa of an edge portion 92A of a guide block 90A may be in a form of being along the outer edge portion 3e of the distributing table 3 for example. For instance, given that the edge face 92Aa is an outwardly projecting curved face, the weighed object M extends along the edge face 92Aa by a width of the edge face 92Aa when the weighed object M is stuck between the edge portion 92A and the outer edge portion 3e. Due to this, a length where the weighed object M extends with respect to the outer edge portion 3e becomes larger than that to the edge portion 102 illustrated in FIG. 9. As a result, the weighed object M has more contact points with the outer edge portion 3e and contacts the outer edge portion 3e at a plurality of points.

As illustrated in FIG. 10(b), an edge face 92Ba of an edge portion 92B of a guide block 90B may be a projecting curved face towards the distributing table 3 side for instance. The edge face 92Ba is a gentle curved face. In this way, given that the edge face 92Ba is a gentle curved face, the weighed object M extends along the edge face 92Ba by a width of the edge face 92Ba when the weighed object M is stuck between the edge portion 92B and the outer edge portion 3e. Due to this, a length where the weighed object M extends with respect to the outer edge portion 3e becomes larger than that to the edge portion 102 illustrated in FIG. 9. As a result, the weighed object M has more contact points with the outer edge portion 3e and contacts the outer edge portion 3e at a plurality of points.

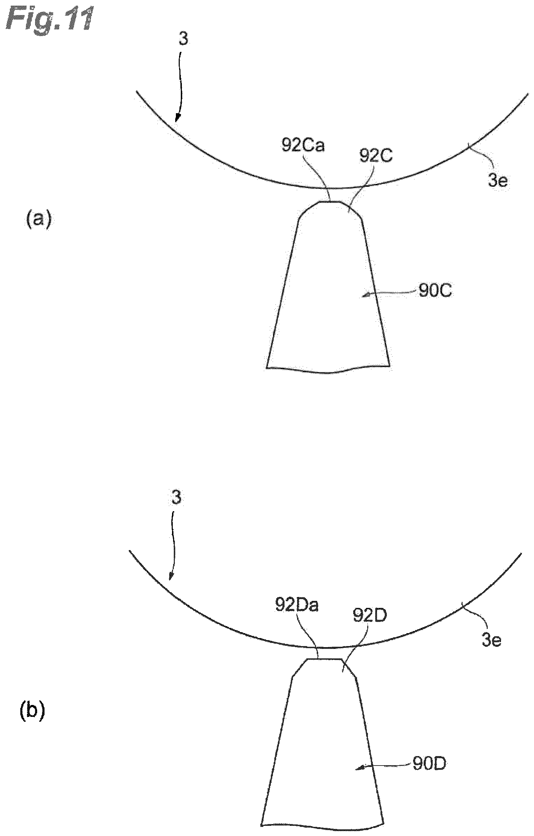

As illustrated in FIG. 11(a), an edge portion 92C of a guide block 90C may be in a polygonal shape. In the edge portion 92C, at least an edge face 92Ca opposite to the edge face of the outer edge portion 3e of the distributing table 3 is a flat surface. In this way, given that the edge portion 92C is in a polygonal shape, the weighed object M extends along the edge face 92Ca by a width of the edge face 92Ca when the weighed object M is stuck between the edge portion 92C and the outer edge portion 3e. Due to this, a length where the weighed object M extends with respect to the outer edge portion 3e becomes larger than that to the edge portion 102 illustrated in FIG. 9. As a result, the weighed object M has more contact points with the outer edge portion 3e and contacts the outer edge portion 3e at a plurality of points.

As illustrated in FIG. 11(b), an edge portion 92D of a guide block 90D may be in a trapezoidal shape. In the edge portion 92D, at least an edge face 92Da opposite to the edge face of the outer edge portion 3e of the distributing table 3 is a flat surface. In this way, given that the edge portion 92D is in a trapezoidal shape, the weighed object M extends along the edge face 92Da by a width of the edge face 92Da when the weighed object M is stuck between the edge portion 92D and the outer edge portion 3e. Due to this, a length where the weighed object M extends with respect to the outer edge portion 3e becomes larger than that to the edge portion 102 illustrated in FIG. 9. As a result, the weighed object M has more contact points with the outer edge portion 3e and contacts the outer edge portion 3e at a plurality of points.

In the above described embodiment, the description has been made with an example of the form in which the distributing table 3 rotates about the central axis A so that the weighed object is conveyed towards the outer edge portion 3e. However, the distributing table 3 may be in a form in which the weighed object is conveyed towards the outer edge portion 3e by vibration.

In the above described embodiment, the description has been made with an example of the form in which the weighed object M is conveyed by the screw 54 in the conveying portion 5. However, a conveying method in the conveying portion 5 maybe another method.

In the above described embodiment, the description has been made with an example of the form in which the guide blocks 90 are connected with each other by the connecting portion 93 in the guide ring 9. However, the guide blocks 90 may not be connected with each other.

While in the above described embodiment, the description has been made with an example of the form in which the distributing table 3 includes the first distributing portion 30 and the second distributing portion 32, the configuration of the distributing table 3 is not limited to it.

### Reference Signs List

1: combination weighing apparatus, 3: distributing table (distributing portion), 3e: outer edge portion, 5: conveying portion, 9: guide ring (dividing portion), 92, 92A, 92B, 92C, 92D: edge portion, M: weighed object

## Claims

1. A combination weighing apparatus (1) having a distributing portion (3) that rotates to convey a weighed object (M) outward, a plurality of conveying portions (5) arranged in a radial manner along an outer edge portion (3e) of the distributing portion (3) and conveying the weighed object (M) discharged from the distributing portion (3), and a plurality of guide blocks (90) arranged between the conveying portions (5) in a radial manner along the outer edge portion (3e) of the distributing portion (3),
**characterized in that**:
the guide blocks (90) each have an edge portion (92) with an edge face (92a), which is a flat surface, opposed to an edge face of the outer edge portion (3e) of the distributing portion (3) such that the weighed object (M) contacts the outer edge portion (3e) of the distributing portion (3) at a plurality of points (P) when the weighed object (M) is positioned across two conveying portions (5) adjacent to each other and between the outer edge portion (3e) of the distributing portion (3) and the edge portion (92) of the guide block (90).

2. A combination weighing apparatus (1) having a distributing portion (3) that rotates to convey a weighed object (M) outward, a plurality of conveying portions (5) arranged in a radial manner along an outer edge portion (3e) of the distributing portion (3) and conveying the weighed object (M) discharged from the distributing portion (3), and a plurality of guide blocks (90) arranged between the conveying portions (5) in a radial manner along the outer edge portion (3e) of the distributing portion (3),
**characterized in that**:
the guide blocks (90) each have an edge portion (92) with an edge face (92a), which is in a form parallel along the outer edge portion (3e) of the distributing portion (3), opposed to an edge face of the outer edge portion (3e) of the distributing portion (3) such that the weighed object (M) contacts the outer edge portion (3e) of the distributing portion (3) at a plurality of points (P) when the weighed object (M) is positioned across two conveying portions (5) adjacent to each other and between the outer edge portion (3e) of the distributing portion (3) and the edge portion (92) of the guide block (90).

## Patentansprüche

1. Eine Kombinationswägevorrichtung (1) mit einem Verteilungsteil (3), der rotiert, um ein gewogenes Objekt (M) nach außen zu befördern, einer Vielzahl von Förderteilen (5), die in radialer Weise entlang eines äußeren Kantenteils (3e) des Verteilungsteils (3) angeordnet sind und die den aus dem Verteilungsteil (3) ausgetragenen gewogenen Objekt (M) fördern, und einer Vielzahl von Führungsblöcken (90), die zwischen den Förderteilen (5) in radialer Weise entlang des äußeren Kantenteils (3e) des Verteilungsteils (3) angeordnet sind,
**dadurch gekennzeichnet, dass**
die Führungsblöcke (90) jeweils einen Kantenteil (92) mit einer Kantenfläche (92a), die eine flache Oberfläche ist, gegenüber einer Kantenfläche des äußeren Kantenteils (3e) des Verteilungsteils (3) aufweisen, so dass das gewogene Objekt (M) den äußeren Kantenteil (3e) des Verteilungsteils (3) an einer Vielzahl von Punkten (P) berührt, wenn das gewogene Objekt (M) über zwei Förderteilen (5) positioniert ist, die nebeneinander und zwischen den äußeren Kantenteilen (3e) des Verteilungsteils (3) und dem Kantenteil (92) des Führungsblocks (90) sind.

2. Eine Kombinationswägevorrichtung (1) mit einem Verteilungsteil (3), der rotiert, um ein gewogenes Objekt (M) nach außen zu befördern, einer Vielzahl von Förderteilen (5), die in radialer Weise entlang eines äußeren Kantenteils (3e) des Verteilungsteils (3) angeordnet sind und die das aus dem Verteilungsteil (3) ausgetragene gewogene Objekt (M) fördern, und einer Vielzahl von Führungsblöcken (90), die zwischen den Förderteilen (5) in radialer Weise entlang des äußeren Kantenteils (3e) des Verteilungsteils (3) angeordnet sind,
**dadurch gekennzeichnet, dass**
die Führungsblöcke (90) jeweils einen Kantenteil (92) mit einer Kantenfläche (92a) aufweisen, die in einer Form parallel entlang des äußeren Kantenteils (3e) des Verteilungsteils (3) ist, die einer Kantenfläche des äußeren Kantenteils (3e) des Verteilungsteils (3) gegenüberliegt, so dass das gewogene Objekt (M) den äußeren Kantenteil (3e) des Verteilungsteils (3) an einer Vielzahl von Punkten (P) berührt, wenn das gewogene Objekt (M) über zwei Förderteilen (5) positioniert ist, die nebeneinander und zwischen dem äußeren Kantenteil (3e) des Verteilungsteils (3) und dem Kantenteil (92) des Führungsblocks (90) sind.

## Revendications

1. Un appareillage de pesage combiné (1) possédant une partie de distribution (3) qui tourne pour transférer un objet pesé (M) vers l'extérieur, une pluralité de parties de transfert (5) agencées d'une manière radiale le long d'une partie de bord externe (3e) de la partie de distribution (3) et qui transfèrent l'objet pesé (M) évacué de la partie de distribution (3), et une pluralité de blocs de guidage (90) agencés entre les parties de transfert (5) d'une manière radiale le long de la partie de bord externe (3e) de la partie de distribution (3),
**caractérisé en ce que** :
les blocs de guidage (90) possèdent chacune une partie de bord (92) avec une face de bord (92a), qui est une surface plate, opposée à une face de bord de la partie de bord externe (3e) de la partie de distribution (3), telle que l'objet pesé (M) vienne en contact avec la partie de bord externe (3e) de la partie de distribution (3) en une pluralité de points (P) lorsque l'objet pesé (M) est positionné en travers de deux parties de transfert (5) adjacentes l'une à l'autre et entre la partie de bord externe (3e) de la partie de distribution (3) et la partie de bord externe (92) du bloc de guidage (90).

2. Un appareillage de pesage combiné (1) possédant une partie de distribution (3) qui tourne pour transférer un objet pesé (M) vers l'extérieur, une pluralité de parties de transfert (5) agencées d'une manière radiale le long d'une partie de bord externe (3e) de la partie de distribution (3) et qui transfèrent l'objet pesé (M) évacué de la partie de distribution (3), et une pluralité de blocs de guidage (90) agencés entre les parties de transfert (5) d'une manière radiale le long de la partie de bord externe (3e) de la partie de distribution (3),
**caractérisé en ce que** :
les blocs de guidage (90) possèdent chacune une partie de bord (92) avec une face de bord (92a), qui est d'une forme parallèle le long de la partie de bord externe (3e) de la partie de distribution (3), opposée à une face de bord de la partie de bord externe (3e) de la partie de distribution (3), telle que l'objet pesé (M) vienne en contact avec la partie de bord externe (3e) de la partie de distribution (3) en une pluralité de points (P) lorsque l'objet pesé (M) est positionné en travers de deux parties de transfert (5) adjacentes l'une à l'autre et entre la partie de bord externe (3e) de la partie de distribution (3) et la partie de bord externe (92) du bloc de guidage (90).
